Europäisches Patentamt

**European Patent Office**

Office européen des brevets

(19)

(11)     **EP 0 923 798 B1**

(12)     **EUROPÄISCHE PATENTSCHRIFT**

(45) Veröffentlichungstag und Bekanntmachung des Hinweises auf die Patenterteilung:
**18.07.2001   Patentblatt 2001/29**

(51) Int Cl.⁷: **H01S 3/0941**, H01S 3/067, H01S 3/105, H01S 3/106, G01N 21/31

(21) Anmeldenummer: **97944856.0**

(22) Anmeldetag: **08.09.1997**

(86) Internationale Anmeldenummer:
**PCT/EP97/04890**

(87) Internationale Veröffentlichungsnummer:
**WO 98/10496 (12.03.1998 Gazette 1998/10)**

(54) **DIODENLASERGEPUMPTER VIELMODEN-WELLENLEITERLASER, INSBESONDERE FASERLASER**

DIODE LASER PUMPED MULTIMODE WAVEGUIDE LASER, PARTICULARLY FIBER LASER

LASER A GUIDE D'ONDES MULTIMODE POMPE PAR DIODE LASER EN PARTICULIER UN LASER A FIBRE

(84) Benannte Vertragsstaaten:
**AT BE CH DE DK ES FI FR GB GR IE IT LI LU MC NL PT SE**

(30) Priorität: **06.09.1996  DE 19636236**

(43) Veröffentlichungstag der Anmeldung:
**23.06.1999   Patentblatt 1999/25**

(73) Patentinhaber: **Toschek, Peter E.**
**20149 Hamburg (DE)**

(72) Erfinder:
 • **TOSCHEK, Peter, E.**
 **D-20149 Hamburg (DE)**
 • **BAEV, Valerie, M.**
 **D-22559 Hamburg (DE)**
 • **BÖHM, Reiner**
 **D-21614 Buxtehude (DE)**

(74) Vertreter: **Hilleringmann, Jochen, Dipl.-Ing. et al**
**Patentanwälte**
**von Kreisler-Selting-Werner,**
**Bahnhofsvorplatz 1 (Deichmannhaus)**
**50667 Köln (DE)**

(56) Entgegenhaltungen:
**WO-A-92/20125**        **DE-C- 3 718 908**
**GB-A- 2 020 013**      **US-A- 5 084 880**
**US-A- 5 311 525**      **US-A- 5 426 656**
**US-A- 5 430 824**

 • **MILLAR ET AL.: "LOW-THRESHOLD CW OPERATION OF AN ERBIUM-DOPED FIBRE LASER PUMPED AT 807 nm WAVELENGTH" ELECTRONICS LETTERS, Bd. 23, Nr. 16, 30.Juli 1987, Seiten 865-866, XP002050789**
 • **BÖHM ET AL.: "Intracavity absorption spectroscopy with a Nd3+ - doped fiber laser " OPTICS LETTERS, Bd. 18, Nr. 22, 15.November 1993, Seiten 1955-1957, XP002050790**
 • **D. JANSEN: "OPTOELEKTRONIK Grundlagen, Bauelemente, Übertragungstechnik, Netzwerke und Bussysteme " 1993 , FIEDR.VIEWEG & SOHN VERLAGSGESELLSCHAFT MBH , BRAUNSCHWEIG/WIESBADEN, GERMANY XP002050791 siehe Seite 172 - Seite 173**

Bemerkungen:
Die Akte enthält technische Angaben, die nach dem Eingang der Anmeldung eingereicht wurden und die nicht in dieser Patentschrift enthalten sind.

EP 0 923 798 B1

# Beschreibung

Die Erfindung betrifft einen diodenlasergepumpten Vielmoden-Wellenleiterlaser, insbesondere Faserlaser.

Vielmodenlaser finden u.a. in verschiedenen spektroskopischen Bereichen Anwendung. In der Absorptionsspektroskopie ist eine breitbandig emittierende Lichtquelle notwendig, wenn innerhalb des Emissionsspektrums schmale Absorptionslinien beobachtet werden sollen. Im Bereich der hochempfindlichen Spektroskopie hat sich die Methode der Intra-Cavity-Spektroskopie ein breites Anwendungsgebiet in der Forschung erobert. Dafür sind Vielmodenlaser notwendig, in deren Resonator neben dem lichtverstärkenden Medium eine Absorptionszelle mit einem schmalbandigen Absorber eingebracht wird.

In den letzten Jahren sind viele für diese Art der Spektroskopie nutzbare Laser entwickelt worden. Dabei handelt es sich meist um Farbstoff- oder Festkörperlaser, die durch einen Ionenlaser gepumpt werden. Solche Anordnungen haben zwar ein glattes Emissionsspektrum, da sie in vielen unabhängigen Lasermoden gleichzeitig emittieren, sind jedoch auf Laboranwendungen beschränkt, da Farbstofflaser sehr empfindlich auf äußere Störungen reagieren, und Ionenlaser als Pumpquelle kaum transportabel sind, einen großen Energieverbrauch haben und an eine Kühlwasserleitung mit hohem Durchfluß angeschlossen werden müssen. Außerdem weisen die meisten in der Praxis interessierenden Absorber eine gut meßbare Absorption im Infrarotbereich auf, während herkömmliche Vielmoden-Laser überwiegend im sichtbaren Spektralbereich am besten arbeiten.

Hier versprechen Wellenleiterlaser und insbesondere Faserlaser wesentliche Verbesserungen, da sie für kleine Bauformen geeignet sind, mechanisch hinreichend stabil und für äußere Störungen praktisch nicht empfänglich sind und nicht aufwendig gekühlt werden müssen. Außerdem kann der Wellenleiter ohne Probleme mit verschiedenen aktiven Ionen dotiert werden, wodurch der Emissionsbereich gut vorbestimmt und in den Infrarotbereich gelegt werden kann.

Nachteil der bisher eingesetzten Wellenleiterlaser ist jedoch, dass sie wiederum durch einen Ionenlaser gepumpt werden müssen. Die Anwendung eines durch einen Argon-Ionenlaser gepumpten Faserlasers in der Intra-Cavity-Spektroskopie ist beispielsweise aus einer Veröffentlichung in OPTICS LETTERS 1993, Vol. 18, Nr. 22, S. 1955 mit dem Titel "Intracavity absorption spectroscopy with a $Nd^{3+}$-doped fiber laser" bekannt. Dieser Aufbau ist jedoch aufgrund des Argon-Ionenlasers nicht mobil einsetzbar.

Aus der gleichen Veröffentlichung ist auch bekannt, dass Faserlaser mit Diodenlasern gepumpt werden können. Die dabei erzielten Emissionsspektren sind allerdings bisher nicht für die Absorptionsspektroskopie mit einem schmalbandigen Absorber geeignet, da sie starke Unregelmäßigkeiten aufweisen, die die Auflösung der Absorptionslinien unmöglich machen.

Es ist folglich Aufgabe der vorliegenden Erfindung, einen mit einer Laserdiode gepumpten Wellenleiterlaser derart auszubilden, dass er für diese Art der Absorptionsspektroskopie geeignet ist. Der Laser einschließlich seiner Pumpquelle soll im Vergleich zu den herkömmlichen Anordnungen einfach und billig herstellbar und aufgrund seiner Größe leicht transportabel sein und keine hohen Anforderungen an die Energieversorgung stellen.

Diese Aufgabe wird erfindungsgemäß durch einen diodenlasergepumpten Vielmoden-Wellenleiterlaser gelöst, der die Merkmale des Anspruchs 1 oder des Anspruchs 4 aufweist. Weitere Ausgestaltungen der Erfindung sind in den Unteransprüchen angegeben.

Jeder Lasermode im Wellenleiterlaser hat longitudinale und transversale Komponenten. Oberhalb der sogenannten Cutoff-Wellenlänge, die auch Abschneidewellenlänge oder Grenzwellenlänge genannt wird und wellenleiterspezifisch ist, werden nur longitudinale Komponenten und die transversalen Fundamentalkomponenten des Wellenleiters geführt.

Es hat sich herausgestellt, daß bei einem Wellenleiterlaser verschiedene transversale Komponenten der Moden miteinander interferieren und dadurch Anlaß zu spektralem Rauschen geben. Da oberhalb der Cutoff-Wellenlänge jedoch alle Lasermoden die gleichen transversalen Komponenten, nämlich die Fundamentalkomponenten, haben, tritt kein Rauschen auf, und das Emissionsspektrum ist nicht von scharfen Interferenzstrukturen überlagert, die schmale Absorptionslinien überdecken. Außerdem reagiert es sehr empfindlich auf schmalbandige Absorption im Resonator, da nur einzelne Moden durch die Absorption unterdrückt werden, ohne Einfluß auf die anderen Moden zu nehmen. Vorzugsweise soll die Cutoff-Wellenlänge mindestens 20 nm unter der kleinsten Emissionswellenlänge liegen.

Als Lichtverstärker kommen vorzugsweise Wellenleiter zum Einsatz, die mit Ionen aus der Gruppe der seltenen Erden, insbesondere mit Nd, Yb, Tm, Ho, Er oder Pr dotiert sind.

Besonders handlich wird ein solcher diodenlasergepumpter Wellenleiterlaser, wenn als Wellenleiter eine Faser, beispielsweise eine Glasfaser, verwendet wird. Die Faser kann je nach Dotierung in geeigneter Länge gewählt und dann auf einer Spule aufgerollt werden. So wird der Bau eines besonders kleinen und handlichen Lasers möglich.

Vorzugsweise wird eine sogenannte Stufenindexfaser eingesetzt, bei der Faserkern und - mantel verschiedene Brechzahlen $n_{Kern}$ bzw. $n_{Mantel}$ mit scharfer Grenze aufweisen. Bei solchen Fasern berechnet sich beispielsweise die Cutoff-Wellenlänge $\lambda_{cut}$ wie folgt:

$$\lambda_{cut} = 2 \cdot \pi \cdot a \cdot NA / 2{,}405.$$

**2**

Dabei ist:

a der Kernradius der Faser;

NA die numerische Apertur,

die sich aus

$$NA = (n_{Kern}^2 - n_{Mantel}^2)^{1/2}$$

ergibt.

Als Wellenleiter können auch sogenannte eindiffundierte Wellenleiter verwendet werden.

Für die hochempfindliche Intra-Cavity-Spektroskopie wird ein Ende des Wellenleiters verspiegelt und das andere Ende entspiegelt. Das Ende des Resonators auf der entspiegelten Seite des Wellenleiters wird von einem weiteren, extern angeordneten Spiegel gebildet. Der Strahlengang innerhalb des Resonators verläuft dann zwischen dem entspiegelten Ende des Wellenleiters und dem externen Spiegel frei außerhalb des Wellenleiters. Dieser Raum kann für die Absorptionsspektroskopie an einem schmalbandigen Absorber genutzt werden. Dazu wird entweder eine Absorptionszelle in den Resonator eingebracht oder der zu analysierende Absorber direkt in den offenen Resonatorteil eingeleitet.

Vorzugsweise wird das entspiegelte Ende des Wellenleiters außerdem schräg geschnitten oder gebrochen, wenn keine perfekte Entspiegelung erreicht werden kann. Damit werden Vielfachreflexionen an der im Laserresonator liegenden Grenzfläche verhindert, durch die das Spektrum erneut von einer störenden Struktur überlagert werden könnte. Vorzugsweise soll der Winkel zwischen der Flächennormalen des entspiegelten Endes und der Achse des Wellenleiters zwischen 1° und 15° betragen. Das Ende kann auch im vom Material des Wellenleiters abhängigen Brewster-Winkel geschnitten sein.

Weiterhin hat sich herausgestellt, daß störende Überlagerungsstrukturen auf dem Emissionsspektrum dadurch unterdrückt werden können, daß der Wellenleiterlaser und der Diodenlaser im Wellenlängenbereich der Emission optisch entkoppelt sind. Außer durch den Auskoppelspiegel des Wellenleiters tritt auch immer etwas Laserlicht durch den Einkoppelspiegel aus. Insbesondere, wenn der Wellenleiterlaser durch den Diodenlaser kollinear gepumpt wird, kann dieser Laserstrahl in der Pumpdiode oder der Kollimationsoptik der Pumpdiode reflektiert und in den Wellenleiterlaser zurückgeworfen werden. Durch dabei auftretende Wellenlängenselektion der in den Wellenleiterlaser zurückgekoppelten Strahlung wird das Emissionsspektrum störend überlagert.

Die optische Entkopplung kann beispielsweise mit einer besonders hohen Verspiegelung des Wellenleiters für die Emissionswellenlänge an seinem verspiegelten Ende mit einem Reflexionsgrad von mindestens 98 %, vorzugsweise mehr als 99 %, erreicht werden. Gleichzeitig sollte der Reflexionsgrad für die Pumpwellenlänge möglichst niedrig sein, um eine niedrige Pumpschwellenleistung des Diodenlasers sicherzustellen.

Ein anderes Ausführungsbeispiel sieht vor, daß zwischen der Laserdiode und dem Wellenleiterlaser eine optische Diode angeordnet ist. Die optische Diode ist für die Emissionswellenlängen des Wellenleiterlasers für den reflektierten Strahl nicht durchlässig. Am verspiegelten Ende des Wellenleiters ausgekoppeltes Laserlicht fällt durch die optische Diode auf die Kollimationsoptik und die Pumpdiode, wird aber durch die optische Diode nicht mehr zurück in den Wellenleiterlaser reflektiert.

In einem weiteren Ausführungsbeispiel wird die optische Entkopplung dadurch erreicht, daß die Kollimationsoptik zwischen Pumpdiode und Wellenleiterlaser chromatische Aberration aufweist. Das Pumplicht der Laserdiode wird auf die Stirnfläche des Wellenleiters fokussiert, die Laseremission des Wellenleiterlasers hingegen wird durch ihre unterschiedliche Wellenlänge von der Kollimationsoptik in einer größeren Fläche fokussiert. Es erfolgt deshalb nur stark verminderte Rückreflexion.

Im Falle eines Lasers mit externem Resonatorspiegel kann der Wellenlängenbereich der Emission außer durch die Dotierung des Wellenleiters, die Reflexionsmaxima der Spiegel, die Pumpwellenlänge oder eine Gitterstruktur im Wellenleiter auch durch ein im Resonator außerhalb des Wellenleiters angeordnetes wellenlängenselektives Element bestimmt werden. Das wellenlängenselektive Element kann entweder fest oder beweglich angeordnet sein. Die Emissionswellenlänge des Wellenleiterlasers wird dadurch entweder fest eingestellt oder kann im Betrieb verändert werden. Im erstgenannten Fall ist der Laser besonders robust und billig herstellbar, kann aber nur für eine bestimmte Gruppe von Absorbern eingesetzt werden, während der Laser im letzteren Fall zwar in einem weiten Bereich durchstimmbar und somit auf verschiedene Absorber einstellbar, jedoch im Aufbau komplizierter und teurer ist.

Als besonders geeignet hat sich ein wellenlängenselektives Element mit optischer Dispersion herausgestellt. Vorzugsweise dient hierzu eine herkömmliche Linse mit chromatischer Aberration oder eine Gradientenlinse mit chromatischer Aberration. Das wellenlängenselektive Element wird beweglich zwischen Wellenleiter und externem Resonatorspiegel angeordnet. Durch Verschiebung, beispielsweise mechanisch oder piezo-elektrisch, wird die Auswahl der Emissionswellenlänge getroffen. Diese Ausführung ist vorteilhaft, da ein Bauteil zur Kollimierung des divergent aus dem Wellenleiter austretenden Strahls ohnehin vorhanden sein muß. Zur Wellenlängenselektion ist deshalb kein weiteres Element im Resonator notwendig, das neue Probleme mit Vielfachreflexionen oder Lichtverluste hervorrufen könnte.

Ist die Durchstimmbarkeit des Wellenleiterlasers nicht notwendig, soll also mit dem wellenlängenselektiven Element der Bereich der Emission nur einmal festgelegt werden, ist die bewegliche Anordnung der Linse nicht nötig. Eine Gradientenlinse kann dann auch einstückig mit dem Wellenleiter verbunden sein, was wiederum die Anzahl der Grenzflächen im Resonator verringert.

Eine andere Möglichkeit der Wellenlängenselektion ist ein wellenlängenselektives Element aus elektro-optischem Material mit optischer Dispersion, wie z. B. ein elektro-optischer Kristall. Der Brechungsindex eines solchen Elements läßt sich elektrisch verändern. Die Wellenlängenselektion und Durchstimmung des Lasers geschieht rein elektrisch. Es sind keine mechanischen Bauteile im Resonator notwendig, die die mechanischen Belastungsgrenzen des Aufbaus vorgeben könnten. Auch der elektro-optische Kristall kann einstückig mit dem Wellenleiter verbunden sein, wobei aber trotzdem die Durchstimmbarkeit erhalten bleibt.

Vorteil von Durchstimmelementen mit optischer Dispersion ist ihre schwache Selektivität. Im Gegensatz zu anderen Elementen, wie z.B. Gittern, bleibt eine breite Emission vorhanden.

Das Durchstimmen des Lasers kann auch durch bereits bekannte Anordnungen aus Spiegel und/oder Prisma erfolgen. Insbesondere kann der aus dem Wellenleiter austretende divergente Strahl über einen Parabolspiegel kollimiert und auf ein Prisma umgelenkt werden. Um unnötige Grenzflächen innerhalb des Resonators zu vermeiden, kann das Prisma einseitig verspiegelt sein. Es dient damit gleichzeitig als Resonatorspiegel.

In einem anderen Ausführungsbeispiel wird als wellenlängenselektives Element ein Resonatorspiegel mit variablem Reflexionsmaximum eingesetzt. Bei solchen Spiegeln ändert sich die Wellenlänge des Reflexionsmaximums über die Oberfläche. Diese Eigenschaft weisen beispielsweise sogenannte Verlaufspiegel auf. Durch Verschieben des Spiegels rechtwinklig zum Strahlengang wird die Wellenlänge des Reflexionsmaximums und damit der Emissionsbereich des Lasers verändert.

Es versteht sich für den Fachmann von selbst, daß die oben erläuterten Entkopplungs- und Wellenlängenselektionsmöglichkeiten in allen denkbaren Kombinationen verwendet werden können. Es können auch mehrere Entkopplungs- und Selektionsmöglichkeiten gleichzeitig eingesetzt weiden.

Die Ausführungsformen des erfindungsgemäßen Wellenleiterlasers mit externem Resonatorspiegel finden insbesondere in der Intra-Cavity-Spektroskopie Anwendung.

Vorzugsweise ist die Dauer der Pumpimpulse des Diodenlasers in allen oben angeführten Ausführungsbeispielen veränderbar. Dadurch ist der dynamische Bereich der Absorptionsmessung im Falle der Intra-Cavity-Spektroskopie wählbar.

Verschiedene bevorzugte Ausführungsbeispiele der Erfindung werden im folgenden anhand der beigefügten Abbildungen näher erläutert:

Figur 1   zeigt einen diodenlasergepumpten Faserlaser mit externem Resonator und Linse mit chromatischer Aberration als wellenlängenselektives Element.

Figur 2   zeigt einen diodenlasergepumpten Faserlaser wie in Figur 1, aber mit Gradientenlinse als wellenlängenselektives Element.

Figur 3   zeigt einen durchstimmbaren diodenlasergepumpten Faserlaser mit Parabolspiegel und Verlaufspiegel als Durchstimmelement.

Figur 4   zeigt einen durchstimmbaren diodenlasergepumpten Faserlaser mit Parabolspiegel und einseitig verspiegeltem Prisma als Durchstimmelement.

Figur 5   zeigt einen Faserlaser wie in Figur 1, aber mit optischer Diode zur Entkopplung von Diodenlaser und Faserlaser.

Figur 6   entspricht Figur 5, aber mit Pumplichtkollimationsoptik mit chromatischer Aberration zur Entkopplung von Diodenlaser und Faserlaser.

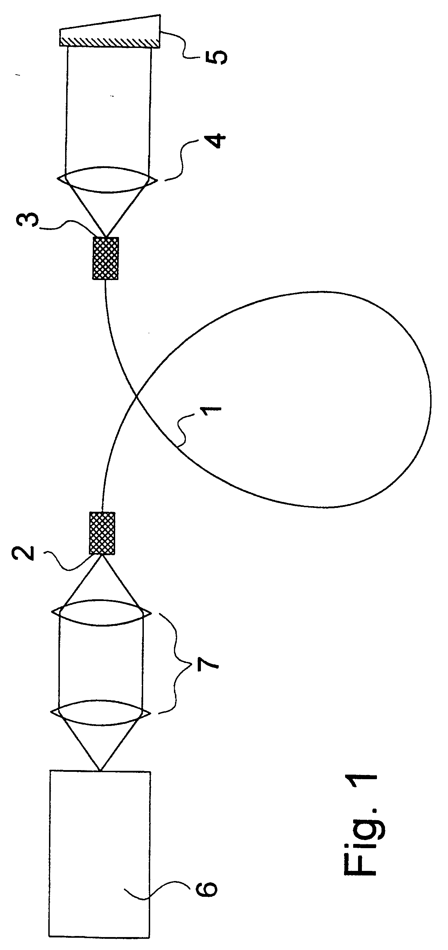

Der in Figur 1 dargestellte Laser ist ein Faserlaser. Die mit einer Konzentration von 500 ppm mit $Nd^{3+}$-Ionen dotierte Glasfaser 1 ist an ihrem einen Ende 2 hochreflektierend verspiegelt. Die Verspiegelung ist direkt auf die Stirnfläche der Faser aufgedampft. Der Reflexionsgrad für Wellenlängen zwischen 900 und 1150 nm beträgt 99,8 %, für die Wellenlängen zwischen 815 und 825 nm aber unter 10 %. Das andere Ende 3 der Glasfaser 1 ist für Wellenlängen zwischen 900 und 1150 nm entspiegelt und schräg zur Achse der Faser geschnitten. Der Winkel zwischen der Flächennormalen der Schnittfläche und der Faserachse beträgt 6°. Das verspiegelte Faserende 2 bildet zusammen mit dem weiteren Spiegel 5 einen optischen Resonator. Der äußere Resonatorteil wird über die Linse 4 an die Faser 1 angekoppelt. Die Linse 4 kollimiert das divergent mit einem Divergenzwinkel von etwa 10° aus der Faser 1 austretende Licht. Die Cutoff-Wellenlänge der ausgewählten Faser liegt bei 860 nm. Die Faser ist 20 cm lang. Der externe Spiegel 5 befindet sich etwa 30 cm vom entspiegelten Ende der Faser entfernt.

Der Faserlaser wird durch einen Diodenlaser 6 mit einer Wellenlänge von etwa 815 bis 825 nm optisch gepumpt. Der Strahl des Diodenlasers 6 wird durch eine Kollimationsoptik 7 kollinear in die Faser eingekoppelt und bewirkt darin die für die Lasertätigkeit notwendige Inversion.

Dadurch, daß die Cutoff-Wellenlänge kleiner ist als die kleinste Emissionswellenlänge, schwingen ausschließlich die longitudinale Komponente und die transversalen Fundamentalkomponenten jeder Lasermode an. Die transversalen Komponenten der Moden sind folglich alle gleich und interferieren nicht miteinander. Das Spektrum wird deshalb nicht durch Interferenzstrukturen unregelmäßig moduliert.

Außerdem kann es bei der kollinearen Einkopplung des Diodenlasers in den Faserlaser zu unerwünschten Wechselwirkungen zwischen den beiden Lasern kommen. Nicht nur durch den Auskoppelspiegel 5, sondern auch durch den Spiegel 2 tritt Laserlicht aus dem Resonator aus. Dieses Licht läuft durch die Kollimationsoptik 7 in den Resonator der Laserdiode 6 und wird zwischen den Grenzflächen und den Resonatorspiegeln der Diode mehrfach reflektiert. Infolge von Interferenzen werden nur bestimmte Wellenlängen wieder in den Faserlaser reflektiert, während andere Wellenlängen unterdrückt werden. Um diesen Effekt, der ebenfalls zur Modulation des Emissionsspektrums des Faserlasers führt, zu unterdrücken, sind der Faserlaser und die Laserdiode in bezug auf die Emissionswellenlänge des Faserlasers optisch entkoppelt. Dies geschieht durch hochreflektierende Beschichtung des Faserendes 2, wodurch nur noch sehr wenig Licht aus dem Faserlaser in Richtung des Diodenlasers 6 emittiert bzw. das wenige von Diodenlaser 6 und Kollimationsoptik 7 zurückgeworfene Licht nicht mehr in die Faser 1 transmittiert wird.

Der Wellenlängenbereich des Faserlasers, in dem die Emission liegt, wird durch die Linse 4 bestimmt. Die Linse 4 weist starke chromatische Aberration auf. Dadurch werden nicht alle Wellenlängen, die aus der Faser 1 austreten, gleichzeitig kollimiert. Nur das kollimierte Strahlenbündel wird aber vom Spiegel 5 in sich reflektiert und vom Faserlaser verstärkt.

Durch Verschieben der Kollimationslinse 4 läßt sich die Wellenlänge des in sich reflektierten Strahls und damit die Emissionswellenlänge des Faserlasers einstellen. Die chromatische Aberration der Kollimationslinse 4 wird vorzugsweise so gewählt, daß nur schwache Wellenlängenselektion eintritt und damit genügend breite Emission erzielt wird. Die benutzte Linse hat den Brechungsindex um $n = 1{,}72$, abhängig von der Wellenlänge, und die Brennweite $f = 8$ mm.

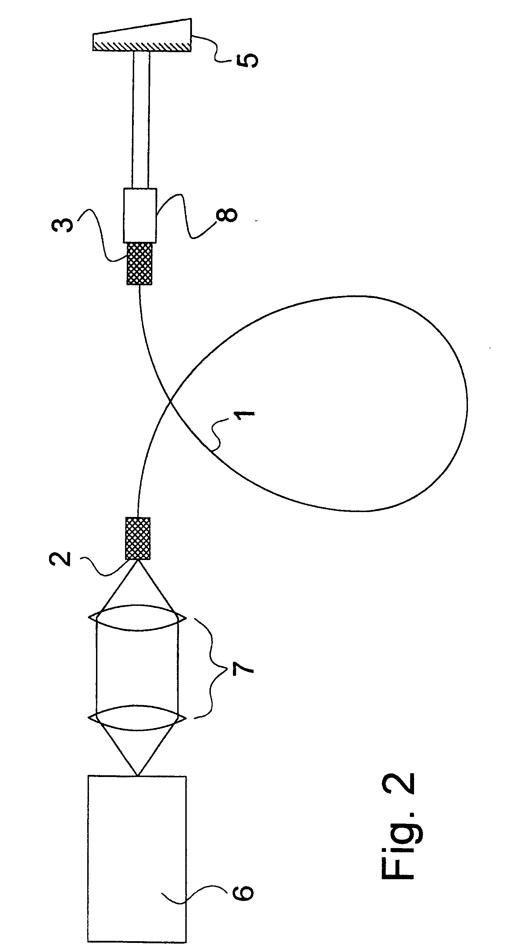

In Figur 2 ist ein Faserlaser mit prinzipiell gleichem Aufbau wie der Faserlaser gemäß Figur 1 zu sehen Im Unterschied dazu wird als Kollimationslinse eine Gradientenlinse 8 verwendet. Bei der Gradientenlinse ändert sich der Brechungsindex über den Radius der Linse kontinuierlich und ist außerdem von der Wellenlänge abhängig. Dadurch wird sowohl die Kollimation des aus der Faser 1 austretenden divergenten Laserstrahls als auch die Wellenlängenselektion erreicht. Die Faser 1 ist an ihrem Ende 3 rechtwinklig zu ihrer Achse geschnitten, und die Gradientenlinse 8, die über plane Grenzflächen verfügt, ist direkt auf das entspiegelte Ende 3 der Faser 1 aufgesetzt. Das Faserende 3 ist rechtwinklig zur Faserachse geschnitten. Der Laser ist dadurch zwar nicht verstimmbar, aber eine störende Grenzfläche im Laserresonator fällt weg.

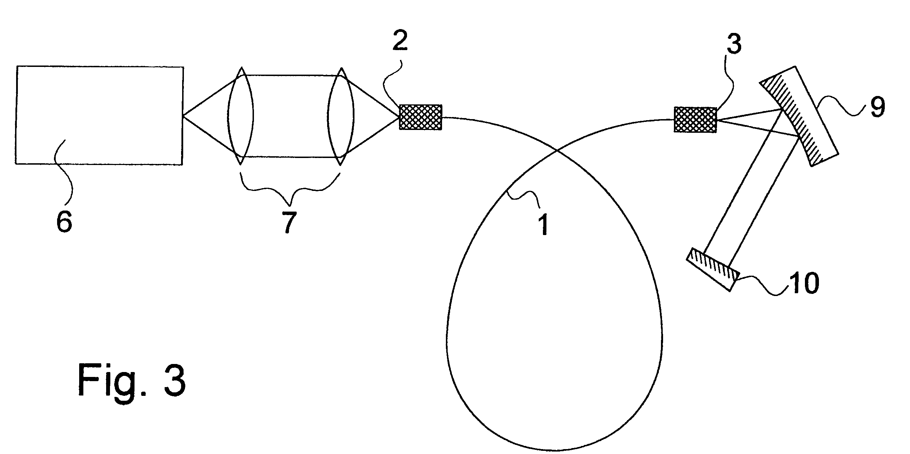

Figur 3 zeigt einen Faserlaser, bei dem der divergent aus der Faser 1 austretende Laserstrahl auf einen Parabolspiegel 9 auftrifft, kollimiert und auf einen Verlaufspiegel 10 umgelenkt wird. Die Wellenlänge des Reflexionsmaximums ändert sich beim Verlaufspiegel 10 in einer Richtung parallel zur Oberfläche. Der Spiegel ist in dieser Richtung verschiebbar angeordnet, so daß das Reflexionsmaximum während des Laserbetriebs verändert werden kann. Dadurch wird der Schwerpunkt der Laseremission verändert.

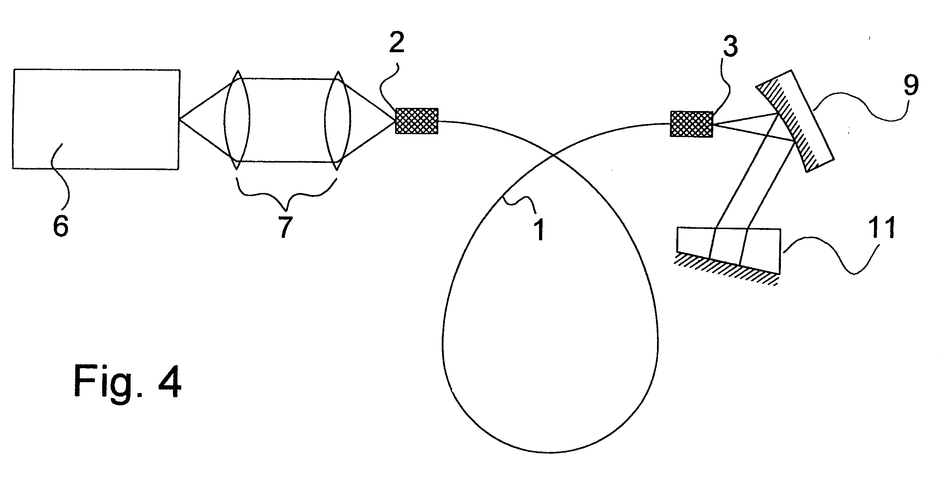

Der in Figur 4 abgebildete Aufbau gleicht bis zum Parabolspiegel 9 dem Aufbau gemäß Figur 3. Im Unterschied dazu ist zur Wellenlängenselektion ein einseitig verspiegeltes Prisma 11 vorgesehen. Das Prisma 11 ist zur Wellenlängenselektion drehbar angeordnet. Die Verspiegelung wirkt als Auskoppelspiegel. Der Strahl wird durch die dispersiven Eigenschaften des Prismas 11 je nach Wellenlänge unterschiedlich abgelenkt. Es trifft nur ein bestimmter Wellenlängenbereich kollimiert auf den Spiegel, wird autokollimiert und von der Faser 1 verstärkt.

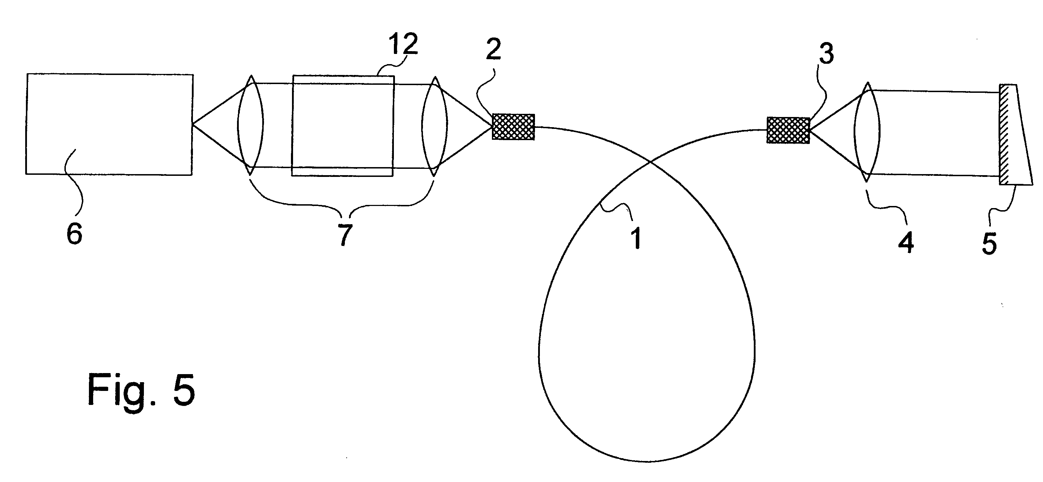

Figur 5 zeigt einen Aufbau, der im wesentlichen mit dem Aufbau gemäß Figur 1 übereinstimmt. Die verspiegelte Seite 2 der Faser 1 hat aber für die Emissionswellenlänge nur den Reflexionsgrad 97 % und kann deshalb die optische Entkopplung von Diodenlaser 6 und Faserlaser nicht gewährleisten. Deshalb befindet sich zusätzlich eine optische Diode 12 im Strahl des Pumplasers vor der Faser 2. Die optische Diode 12 ist für die Emissionswellenlänge des Faserlasers für den in Richtung zum Faserlaser zurückgeworfenen Strahl nicht durchlässig. Das an der verspiegelten Seite der Faser ausgekoppelte Licht fällt durch die optische Diode, wird an einer der danach vorhandenen Grenzflächen teilweise reflektiert, aber von der optischen Diode nicht in Richtung zum Faserlaser durchgelassen. So kann es nicht zur Wechselwirkung zwischen dem Licht im Resonator des Faserlasers und dem von der Pumpseite rückreflektierten Licht kommen. Das Emissionsspektrum ist deshalb frei von daraus resultierenden Interferenzstrukturen.

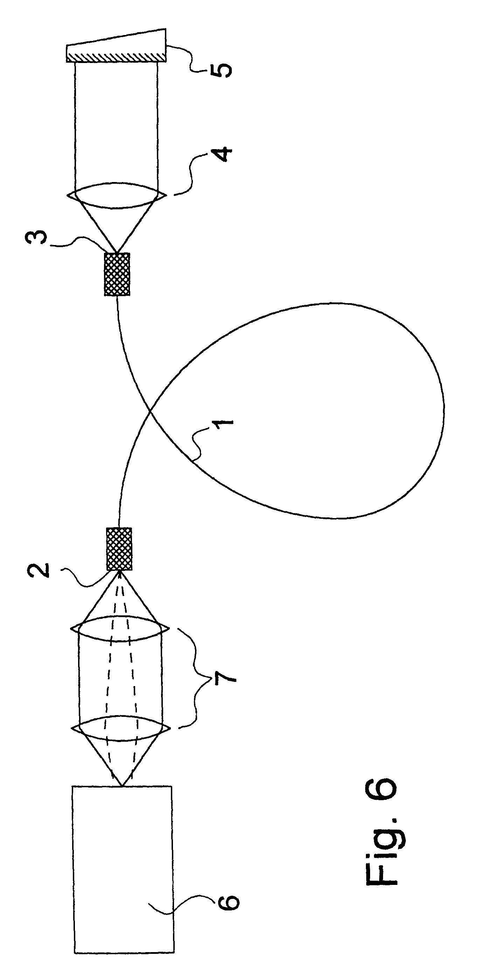

Im Aufbau gemäß Figur 6 übernehmen Linsen mit chromatischer Aberration in der Kollimationsoptik 7 die Funktion der optischen Diode. Während die Pumpwellenlänge im Bereich um 820 nm genau in der Faser fokussiert wird, wird der auf der verspiegelten Seite 2 der Faser ausgekoppelte Laserstrahl, dessen Wellenlänge im Infrarotbereich liegt, nicht kollimiert. Folglich wird nur ein minimaler Teil des Strahls in den Faserlaser zurückgeworfen. Der Strahlengang des divergent aus der Faser austretenden Strahls ist gestrichelt angedeutet.

**Patentansprüche**

1. Diodenlasergepumpter Vielmoden-Wellenleiterlaser, bei dem die Cutoff-Wellenlänge des Wellenleiters (1) kleiner als die kleinste Wellenlänge des Emissionsspektrums des Wellenleiterlasers ist, **dadurch gekennzeichnet,** dass der Wellenleiter (1) und der Diodenlaser (6) im Wellenlängenbereich der Emission des Wellenleiterlasers durch Verspiegelung eines Endes (2) des Wellenleiters (1) mit einem Reflektionsgrad von mindestens 99,9% optisch entkoppelt sind.

2. Wellenleiterlaser nach Anspruch 1, dadurch gekennzeichnet, dass zwischen Diodenlaser (6) und Wellenleiter (1) eine Kollimationsoptik (7) angeordnet ist.

3. Wellenleiterlaser nach Anspruch 1 oder 2, dadurch gekennzeichnet, dass zwischen Diodenlaser (6) und Wellenleiter

   (1) eine optische Diode angeordnet ist.

4. Diodenlasergepumpter Vielmoden-Wellenleiterlaser, bei dem die Cutoff-Wellenlänge des Wellenleiters (1) kleiner als die kleinste Wellenlänge des Emissionsspektrums des Wellenleiterlasers ist, **dadurch gekennzeichnet,** dass der Wellenleiter (1) und der Diodenlaser (6) im Wellenlängenbereich der Emission des Wellenleiterlasers durch Verspiegelung eines Endes (2) des Wellenleiters (1) mit einem Reflektionsgrad von mindestens 98% und zusätzlich durch Anordnung einer Kollimationsoptik (7) und/oder einer optischen Diode zwischen Diodenlaser (6) und Wellenleiter (1) optisch entkoppelt sind.

5. Wellenleiter nach Anspruch 4, dadurch gekennzeichnet, dass das verspiegelte Ende (2) des Wellenleiters mit einem Reflektionsgrad von mindestens 99% für die Emissionswellenlänge verspiegelt ist.

6. Wellenleiter nach Anspruch 5, dadurch gekennzeichnet, dass das verspiegelte Ende (2) des Wellenleiters mit einem Reflektionsgrad von mindestens 99,9% für die Emissionswellenlänge verspiegelt ist.

7. Wellenleiterlaser nach einem der Ansprüche 1 bis 6, dadurch gekennzeichnet, dass im Resonatorbereich außerhalb des Wellenleiters (1) ein wellenlängenselektives Element (4;8;10;11) angeordnet ist.

8. Wellenleiterlaser nach Anspruch 7, dadurch gekennzeichnet, dass das wellenlängenselektive Element (4;8;11) optische Dispersion aufweist.

9. Wellenleiterlaser nach Anspruch 8, dadurch gekennzeichnet, dass das wellenlängenselektive Element eine Linse (4) mit chromatischer Aberration ist.

10. Wellenleiterlaser nach Anspruch 8, dadurch gekennzeichnet, dass das wellenlängenselektive Element eine Gradientenlinse (8) ist.

11. Wellenleiterlaser nach Anspruch 8, dadurch gekennzeichnet, dass das wellenlängenselektive Element aus elektro-optischem Material besteht.

12. Wellenleiterlaser nach Anspruch 10 oder 11, dadurch gekennzeichnet, dass die Gradientenlinse (8) bzw. der elektro-optische Modulator einstückig mit dem Wellenleiter (1,3) verbunden ist.

13. Wellenleiterlaser nach Anspruch 7, dadurch gekennzeichnet, dass das wellenlängenselektive Element ein Durchstimmelement mit Spiegel (9,10) und/oder Prisma (11) ist.

14. Wellenleiterlaser nach Anspruch 13, dadurch gekennzeichnet, dass das Durchstimmelement aus einem Parabolspiegel (9) besteht, der den Laserstrahl im Resonator auf ein Prisma umlenkt.

15. Wellenleiterlaser nach Anspruch 14, dadurch gekennzeichnet, dass das Prisma (11) einseitig verspiegelt ist.

16. Wellenleiterlaser nach Anspruch 7, dadurch gekennzeichnet, dass das wellenlängenselektive Element ein Resonatorspiegel (10) mit variablem Reflexionsmaximum ist.

17. Wellenleiterlaser nach einem der Ansprüche 1 bis 16, dadurch gekennzeichnet, dass die Dauer der Pumpimpulse des Diodenlasers (6) veränderbar ist.

18. Wellenleiterlaser nach einem der Ansprüche 1 bis 17, dadurch gekennzeichnet, dass der Wellenleiter (1) mit Ionen aus der Gruppe der seltenen Erden dotiert ist.

19. Wellenleiterlaser nach Anspruch 18, dadurch gekennzeichnet, dass der Wellenleiter (1) mit Nd, Pr, Tm, Ho, Er, oder Yb dotiert ist.

20. Wellenleiterlaser nach einem der Ansprüche 1 bis 19, dadurch gekennzeichnet, dass der Wellenleiter eine Faser (1) ist.

21. Wellenleiterlaser nach Anspruch 20, dadurch gekennzeichnet, dass die Faser eine Glasfaser ist.

22. Wellenleiterlaser nach einem der Ansprüche 1 bis 21, dadurch gekennzeichnet, dass der Wellenleiter ein eindiffundierter Wellenleiter ist.

23. Wellenleiterlaser nach einem der Ansprüche 1 bis 21, dadurch gekennzeichnet, dass der Wellenleiter (1) ein für das emittierte Licht verspiegeltes (2) und ein für das emittierte Licht entspiegeltes Ende (3) aufweist und der Laserresonator vom verspiegelten Ende (2) und einem weiteren Spiegel (5) gebildet ist.

24. Wellenleiterlaser nach Anspruch 23, dadurch gekennzeichnet, dass die Flächennormale des entspiegelten Endes (3) des Wellenleiters (1) mit der Achse des Wellenleiters einen Winkel bildet.

25. Wellenleiterlaser nach Anspruch 24, dadurch gekennzeichnet, dass der Winkel gleich einem Winkel zwischen 1° und 15° oder gleich dem Brewster-Winkel ist.

26. Verwendung eines Wellenleiterlasers nach einem der Ansprüche 1 bis 25 für die Intracavity-Spektroskopie.

**Claims**

1. A diode laser pumped multimode waveguide laser, wherein the cutoff wavelength of the waveguides (1) is smaller than the smallest wavelength of the emission spectrum of the waveguide laser, characterized in that the waveguide laser (1) and the diode laser (6) are optically decoupled in the wavelength range of the waveguide laser emission by a reflective end (2) of the waveguide (1) having a reflectivity of at least 99.9%.

2. The waveguide laser of claim 1, characterized in that a collimating optics (7) is disposed between the diode laser (6) and the waveguide laser (1).

3. The waveguide laser of one of claims 1 or 2, characterized in that an optical diode is provided between the laser diode (6) and the waveguide laser (1).

4. A diode laser pumped multimode waveguide laser, wherein the cutoff wavelength of the waveguides (1) is smaller than the smallest wavelength of the emission spectrum of the waveguide laser, characterized in that the waveguide laser (1) and the diode laser (6) are optically decoupled in the wavelength range of the waveguide laser emission by a reflective end (2) of the waveguide (1) having a reflectivity of at least 98% and, additionally, by providing a collimating optics (7) and/or an optical diode between the diode laser (6) and the waveguide laser (1).

5. The waveguide laser of claim 4, characterized in that the reflective end (2) of the waveguide has a reflectivity for the emission wavelength of at least 99%.

6. The waveguide laser of claim 5, characterized in that the reflective end (2) of the waveguide has a reflectivity for the emission wavelength of at least 99.9%.

7. The waveguide laser of one of claims 1 to 6, characterized in that a wavelength-selective element (4; 8; 10; 11) is arranged in the resonator area outside the waveguide (1).

8. The waveguide laser of claim 7, characterized in that the wavelength-selective element (4; 8; 11) has optical dispersion.

9. The waveguide laser of claim 8, characterized in that the wavelength-selective element is a lens (4) with chromatic aberration.

10. The waveguide laser of claim 8, characterized in that the wavelength-selective element is a gradient lens (8).

11. The waveguide laser of claim 8, characterized in that the wavelength-selective element is made of electro-optical material.

12. The waveguide laser of claim 10 or 11, characterized in that the gradient lens (8) or the electro-optical modulator is integrally connected with the waveguide (1, 3).

13. The waveguide laser of claim 7, characterized in that the wavelength-selective element is a tuning element with a mirror (9, 10) and/or a prism (11).

14. The waveguide laser of claim 13, characterized in that the tuning element is a parabolic mirror (9) deflecting the laser beam in the resonator onto a prism (11).

15. The waveguide laser of claim 14, characterized in that the prism (11) is reflective on one surface.

16. The waveguide laser of claim 7, characterized in that the wavelength-selective element is a resonator mirror (10) with a variable maximum of reflection.

17. The waveguide laser of one of claims 1 to 16, characterized in that the duration of the pumping pulses of the diode laser (6) is variable.

18. The waveguide laser of one of claims 1 to 17, characterized in that the waveguide (1) is doted with ions from the group of rare earths.

**19.** The waveguide laser of claim 18, characterized in that the waveguide

(1) is doted with Nd, Pr, Tm, No, Er or Yb.

**20.** The waveguide laser of one of claims 1 or 19, characterized in that the waveguide is a fiber (1).

**21.** The waveguide laser of claim 20, characterized in that the fiber is a glass fiber.

**22.** The waveguide laser of one of claims 1 to 21, characterized in that the waveguide is an indiffused waveguide.

**23.** The waveguide laser of one of claims 1 to 21, characterized in that the waveguide (1) has an end (2) reflecting the emitted light and an end (3) not reflecting the emitted light, and that the laser resonator is formed by the mirrored end (2) and another mirror (5).

**24.** The waveguide laser of claim 23, characterized in that the normal to the surface of the non-reflective end (3) of the waveguide (1) forms an angle with the axis of the waveguide.

**25.** The waveguide laser of claim 24, characterized in that the angle is an angle between 1° and 15° or the Brewster angle.

**26.** Use of a waveguide laser according to one of claims 1 to 25 for intra-cavity spectroscopy.

**Revendications**

**1.** Laser à guide d'ondes multimode pompé par laser à diode, dans lequel la longueur d'onde de coupure du guide d'ondes (1) est plus courte que la longueur d'onde la plus courte du spectre d'émission du laser à guide d'ondes,
caractérisé en ce que le guide d'ondes (1) et le laser à diode (6), dans le domaine de longueurs d'onde de l'émission du laser à guide d'ondes, sont optiquement découplés par le dépôt d'une couche réfléchissante sur une extrémité (2) du guide d'ondes (1), cette extrémité ayant un degré de réflexion au moins de 99,9 %.

**2.** Laser à guide d'ondes selon la revendication 1, caractérisé en ce qu'une optique de collimation (7) est disposée entre le laser à diode (6) et le guide d'ondes (1).

**3.** Laser à guide d'ondes selon la revendication 1 ou 2, caractérisé en ce qu'une diode optique est disposée entre le laser à diode (6) et le guide d'ondes (1).

**4.** Laser à guide d'ondes multimode pompé par laser à diode, dans lequel la longueur d'onde de coupure du guide d'ondes (1) est plus courte que la longueur d'onde la plus courte du spectre d'émission du laser à guide d'ondes,
caractérisé en ce que le guide d'ondes (1) et le laser à diode (6), dans le domaine de longueurs d'onde de l'émission du laser à guide d'ondes, sont optiquement découplés par le dépôt d'une couche réfléchissante sur une extrémité (2) du guide d'ondes (1), cette extrémité ayant un degré de réflexion au moins de 98 %, et sont découplés, en outre, par la disposition d'une optique de collimation (7) et/ou d'une diode optique placée entre le laser à diode (6) et le guide d'ondes (1).

**5.** Guide d'ondes selon la revendication 4, caractérisé en ce que l'extrémité (2) à couche réfléchissante du guide d'ondes est à couche réfléchissante en ayant un degré de réflexion au moins de 99 % pour la longueur d'onde d'émission.

**6.** Guide d'ondes selon la revendication 5, caractérisé en ce que l'extrémité (2) à couche réfléchissante du guide d'ondes est à couche réfléchissante en ayant un degré de réflexion au moins de 99,9 % pour la longueur d'onde d'émission.

**7.** Laser à guide d'ondes selon l'une quelconque des revendications 1 à 6, caractérisé en ce qu'un élément (4 ; 8 ; 10 ; 11) sélectif concernant la longueur d'onde est disposé dans le domaine du résonateur, à l'extérieur du guide d'ondes (1).

**8.** Laser à guide d'ondes selon la revendication 7, caractérisé en ce que l'élément (4 ; 8 ; 11) sélectif concernant la longueur d'onde présente une dispersion optique.

**9.** Laser à guide d'ondes selon la revendication 8, caractérisé en ce que l'élément sélectif concernant la longueur d'onde est une lentille (4) à aberration chromatique.

**10.** Laser à guide d'ondes selon la revendication 8, caractérisé en ce que l'élément sélectif concernant la longueur d'onde est une lentille (8) à gradient.

**11.** Laser à guide d'ondes selon la revendication 8, caractérisé en ce que l'élément sélectif concernant la longueur d'onde se compose d'un matériau électrooptique.

**12.** Laser à guide d'ondes selon la revendication 10 ou 11, caractérisé en ce que la lentille (8) à gradient ou le modulateur électro-optique est relié de façon monobloc au guide d'ondes (1, 3).

13. Laser à guide d'ondes selon la revendication 7, caractérisé en ce que l'élément sélectif concernant la longueur d'onde est un élément à fréquence variable comportant un miroir (9, 10) et/ou un prisme (11).

14. Laser à guide d'ondes selon la revendication 13, caractérisé en ce que l'élément à fréquence variable se compose d'un miroir parabolique (9) qui dévie le faisceau laser dans le résonateur, sur un prisme.

15. Laser à guide d'ondes selon la revendication 14, caractérisé en ce que le prisme (11) est à couche réfléchissante sur un côté.

16. Laser à guide d'ondes selon la revendication 7, caractérisé en ce que l'élément sélectif concernant la longueur d'onde est un miroir (10) de résonateur ayant un maximum de réflexion variable.

17. Laser à guide d'ondes selon l'une quelconque des revendications 1 à 16, caractérisé en ce que la durée des impulsions de pompage du laser à diode (6) est modifiable.

18. Laser à guide d'ondes selon l'une quelconque des revendications 1 à 17, caractérisé en ce que le guide d'ondes (1) est dopé avec des ions du groupe des terres rares.

19. Laser à guide d'ondes selon la revendication 18, caractérisé en ce que le guide d'ondes (1) est dopé avec du néodyme (Nd), du praséodyme (Pr), du thulium (Tm), de l'holmium (Ho), de l'erbium (Er) ou de l'ytterbium (Yb).

20. Laser à guide d'ondes selon l'une quelconque des revendications 1 à 19, caractérisé en ce que le guide d'ondes est une fibre (1).

21. Laser à guide d'ondes selon la revendication 20, caractérisé en ce que la fibre est une fibre de verre.

22. Laser à guide d'ondes selon l'une quelconque des revendications 1 à 21, caractérisé en ce que le guide d'ondes est un guide d'ondes diffusé à l'intérieur.

23. Laser à guide d'ondes selon l'une quelconque des revendications 1 à 21, caractérisé en ce que le guide d'ondes (1) comprend une extrémité (2) à couche réfléchissante pour la lumière émise et une extrémité (3) à couche antireflet pour la lumière émise, et en ce que le résonateur à laser est constitué de l'extrémité (2) à couche réfléchissante et d'un autre miroir (5).

24. Laser à guide d'ondes selon la revendication 23, caractérisé en ce que la verticale de surface de l'extrémité (3) à couche antireflet du guide d'ondes (1) forme un angle avec l'axe du guide d'ondes.

25. Laser à guide d'ondes selon la revendication 24, caractérisé en ce que l'angle est égal à un angle compris entre 1° et 15° ou égal à l'angle de Brewster.

26. Utilisation d'un laser à guide d'ondes selon l'une quelconque des revendications 1 à 25 pour la spectroscopie endocavitaire.

Fig. 1

Fig. 2

EP 0 923 798 B1

Fig. 3

Fig. 4

EP 0 923 798 B1

Fig. 5

EP 0 923 798 B1

Fig. 6